# EUROPÄISCHE PATENTANMELDUNG

(11) **EP 4 202 251 A1**
(43) Veröffentlichungstag der Anmeldung: **28.06.2023**
(21) Anmeldenummer: 21217540.0
(22) Anmeldetag: 23.12.2021
(51) Int. Cl.: F16F 1/02

(54) **EBENE DREHFEDER FÜR EINEN SERIENELASTISCHEN AKTOR**

(71) Anmelder: Maxon International AG, 6072 Sachseln (CH)
(72) Erfinder: Busse-Grawitz, Max Erick, 6055 Alpnach Dorf (CH)
(74) Vertreter: Grünecker Patent- und Rechtsanwälte PartG mbB

(57) **Zusammenfassung**

Die vorliegende Erfindung bezieht sich auf eine ebene Drehfeder, insbesondere für einen serienelastischen Aktor, mit einem inneren Befestigungspunkt, mindestens zwei äußeren Befestigungspunkten und mindestens zwei Federarmen, die jeweils den inneren Befestigungspunkt mit je einem der äußeren Befestigungspunkte federelastisch verbinden, wobei die Federarme eine gleichartige Kontur aufweisen und symmetrisch, vorzugsweise punktsymmetrisch, zum inneren Befestigungspunkt verlaufen. Die Federarme der ebenen Drehfeder weisen erfindungsgemäß einen S-förmigen Verlauf auf. Des Weiteren bezieht sich die vorliegende Erfindung auf einen serienelastischen Aktor mit einer solchen ebenen Drehfeder sowie auf ein Herstellungsverfahren für eine ebene Drehfeder.

## Beschreibung

Die vorliegende Erfindung bezieht sich auf eine ebene Drehfeder, insbesondere für einen serienelastischen Aktor, mit einem inneren Befestigungspunkt, mindestens zwei äußeren Befestigungspunkten und mindestens Federarmen, die jeweils den inneren Befestigungspunkt mit je einem der äußeren Befestigungspunkte federelastisch verbinden, wobei die Federarme eine gleichartige Kontur aufweisen und symmetrisch, vorzugsweise punktsymmetrisch zum inneren Befestigungspunkt verlaufen. Des Weiteren bezieht sich die vorliegende Erfindung auf einen serienelastischen Aktor mit einer solchen ebenen Drehfeder sowie auf ein Herstellungsverfahren für eine ebene Drehfeder.

Serienelastische Aktoren mit einer ebenen Drehfeder werden beispielsweise in Roboteranwendungen eingesetzt, um einen Roboterarm elastisch mit dem Grundkörper zu verbinden und anzutreiben. Roboteranwendungen in der Industrie erfüllen eine Vielzahl von Aufgaben, bei denen es um die Bewegung und Positionierung verschiedener Objekte geht. Ein üblicher Industrieroboter für eine automatisierte Fertigung kann einen oder mehrere Arme aufweisen, die mit Greifern ausgestattet sind, um Objekte aufzunehmen, zu transportieren und zu positionieren. Eine wichtige mechanische Anforderung für einen solchen Industrieroboter ist es, große und präzise Kräfte und Drehmomente zu erzeugen und dabei die Ansteuerung stabil zu halten. Diese Drehmomente und Kräfte werden von elektromechanischen Aktoren erzeugt, üblicherweise Elektromotoren, die auf ein elektrisches Steuersignal hin ein hohes Drehmoment aufbringen, das entweder direkt in eine Drehbewegung oder über ein lineares Umwandlungselement in eine lineare Kraft übertragen wird.

Serienelastische Aktoren mit einer ebenen Drehfeder werden beispielsweise auch in Exoskeletten oder in Laufrobotern eingesetzt. Es gibt zahlreiche weitere Anwendungen, bei denen das Drehmoment, welches von einem Aktuator erzeugt wird, übertragen werden soll. Die ebene Drehfeder gibt der Übertragung eine Elastizität wodurch harte Schläge auf die Mechanik des Aktuators und die Umgebung verhindert oder zumindest deutlich reduziert werden können.

Einfache steife Aktoren können in einem Robotergelenk große Kräfte aus einer kleinen Gelenkverschiebung erzeugen und ermöglichen eine hohe Bandbreite der Kraftübertragung und eine präzise Positionssteuerung. Die Steifheit eines herkömmlichen Robotergelenks erschwert jedoch die Steuerung der Kräfte. Aufgrund der Bedeutung der Kraftsteuerung bei Robotergelenkantrieben wird eine hohe Steifigkeit vermieden, um eine bessere Kraftsteuerung zu erreichen. Eine weit verbreitete Möglichkeit hierzu besteht darin, ein elastisches Element mit dem Aktor in Reihe zu schalten. Ein solcher serienelastischer Aktor weist im Verhältnis zu einem steifen Aktor eine verbesserte Kraftsteuerung auf, da mit einem in Reihe geschalteten elastischen Element größere Verformungen erforderlich sind, um eine geforderte Kraft zu erzeugen. Weiter ermöglicht ein solches elastisches Element die ausgeübte Kraft über die Position zu erfassen, anstatt direkt über die Steuerung des Aktors vorzugeben, was die Genauigkeit und Stabilität des Antriebs verbessert und gleichzeitig die Geräuschentwicklung reduziert.

Bei der Entwicklung von elastischen Elementen für einen serienelastischen Aktuator von Robotergelenken besteht neben der Randbedingung eines eingeschränkten Bauraums auch die Anforderung einer großen Anzahl von Bewegung und großen aufgebrachten Drehmomenten ohne Rutschen oder Wandern standzuhalten, sowie eine wirtschaftliche Herstellung zu berücksichtigen. Dabei sind gerade die Größeneinschränkungen, die sich aus den Dimensionen des Aktors und des Robotergelenks sowie der Arbeitsumgebung ergeben, in Verbindung mit den mechanischen Anforderungen als große Herausforderung anzusehen. In der Technik sind hierfür im Wesentlichen ebene Biegefedern bekannt, die oftmals auch als Torsionsfedern bezeichnet werden, die in dem geringen zur Verfügung stehenden Bauraum eines Robotergelenkantriebs als elastisches Element eingesetzt werden. Ein derartiges Robotergelenk mit einer ebenen Drehfeder zeigt beispielsweise die DE 10 2009 056 671 A1. Die darin offenbarten Federbügel sind in einer Drehrichtung angeordnet. Dabei ist für jeden Federbügel der erste Abschnitt an dem inneren Montagesegment an einer anderen Umfangsposition als jener Position, an der der zweite Abschnitt an dem äußeren Montagesegment befestigt ist, befestigt. Neben herkömmlichem Federstahl werden für derartige ebene Drehfedern insbesondere Federtitan aber auch Verbundwerkstoffe mit Kohle- und Glasfasern, eingesetzt. Weiter werden neben einfachen Federkonzeptionen auch speziell optimierte Federn mit besonderen Formen und Löchern in den weniger belasteten Teilen eingesetzt. Eine optimierte Konstruktion einer ebenen Drehfeder ist beispielsweise aus der EP 3 121 472 A1 bekannt. Die Herstellung erfolgt entsprechend dem eingesetzten Material durch Biegen, Fräsen, oder Erodieren und Polieren. Die Kosten dieser Herstellungsverfahren sind gerade bei Material mit hoher Steifigkeit zum Teil sehr hoch, insbesondere bei der Verwendung von subtraktiven Fertigungsmethoden. Additive Fertigung von Federstahl und Federtitan mittels Sinter- oder Druckverfahren erfordert eine teure Nachbearbeitung der Oberflächen zwecks Glättung und Härtung. Zusätzlich kommt es insbesondere bei additiv gefertigten Drehfedern zu Problemen an der Verbindungsstelle zur Kraftausleitung, beispielsweise durch ein Verdrehen der Stifte oder Einfressen der Aufnahme, was eine zusätzliche Hysterese im Drehmoment und eine Änderung im Verdrehungswinkelverlauf erzeugt.

Der vorliegenden Erfindung liegt daher die Aufgabe zugrunde, eine verbesserte ebene Drehfeder für einen serienelastischen Aktor bereitzustellen, die eine verbesserte Festigkeit und reproduzierbare Auslenkung bei niedrigen Kosten ermöglicht.

Diese Aufgabe wird bei einer gattungsgemäßen ebenen Drehfeder dadurch gelöst, dass die Federarme der ebenen Drehfeder einen S-förmigen Verlauf aufweisen.

Die spezielle einteilige Form der erfindungsgemäßen ebenen Drehfeder umfasst mindestens zwei S-förmige Federarmen mit einer identischen Form und einer symmetrisch zum inneren Befestigungspunkt vorgesehenen Anordnung, d.h. eine um 180° (bzw. 360°/ Anzahl S-förmige Federarme) versetzte Anordnung der mindestens zwei S-förmigen Federarme am inneren Befestigungspunkt, bzw. einer symmetrischen, vorzugsweise punktsymmetrischen Ausbildung der ebenen Drehfeder zum Mittelpunkt des inneren Befestigungspunkts. Die S-förmigen Federarme verbinden je einen der äußeren Befestigungspunkte federelastisch mit dem inneren Befestigungspunkt wobei die S-förmigen Federarme eine gleichartige Kontur aufweisen. Die S-förmigen Federarme erzeugen optimale Federeigenschaften für den Einsatz in einen serienelastischen Aktor. Die Festigkeit und Federelastizität kann mit der erfindungsgemäßen ebenen Drehfeder durch die Formgebung, auf die für den Einsatz in einem serienelastischen Aktor benötigten Werte abgeglichen werden. Die im wesentlichen linearen Federkennlinie und die dadurch resultierende reproduzierbare Auslenkung der ebenen Drehfeder ist dabei sehr hoch. Dadurch ist es möglich, das Drehmoment am serienelastischen Aktor aufgrund der Auslenkung der ebenen Drehfeder zu messen.

In einer bevorzugten Ausgestaltung weist die Drehfeder zwei Federarme auf, auch wenn die Anzahl der Federarme variieren kann. Eine höhere Anzahl Federarme erhöht die Federkonstante und damit verringert sich die Drehnachgiebigkeit der ebenen Drehfeder. Da die Federarme auf möglichst kleinem Volumen untergebracht werden sollten, haben sich zwei Federarme als optimal zwischen Federelastizität und benötigtem Bauraum herausgestellt. Die symmetrische S-förmige Struktur der ebenen Drehfeder mit zwei antiparallel zum inneren Befestigungspunkt verlaufenden S-förmigen Federarmen ermöglicht auf minimalen Raum eine maximale Federlänge, ohne dass die Drehfeder mit sich selbst kollidiert, mit einer im Wesentlichen linearen Federkennlinie.

In einer sinnvollen Ausgestaltung ist eine Drehfeder-Mittellinie vorgesehen, die sich als Gerade durch einen äußeren Befestigungspunkt und einen Mittelpunkt der Drehfeder erstreckt, wobei die S-förmigen Federarme jeweils einen an den inneren Befestigungspunkt angrenzenden inneren Bogen und einen an die äußeren Befestigungspunkte angrenzenden äußeren Bogen aufweisen, wobei sich die Länge des Abstands der Außenkontur des inneren Bogens gegenüber der Drehfeder-Mittellinie und die Länge des Abstands der Außenkontur des äußeren Bogens gegenüber der Drehfeder-Mittellinie weniger als 20%, vorzugsweise weniger als 10% unterscheiden, und besonders bevorzugt die beiden Längen der Abstände gleich groß sind. Neben der Optimierung der Federeigenschaften kann das besondere Design der an dem inneren Befestigungspunkt vorgesehenen S-förmigen Federarme eine resultierende Radialbewegung der Feder beim Einleiten einer Tangentialkraft minimieren, bevorzugt auf eine resultierende Radialbewegung von weniger als 20 % der eingeleiteten Tangentialbewegung. Die symmetrische Ausgestaltung der S-förmigen Federarme erzeugt einen besonders linearen Charakter der Federsteifigkeit über einen großen Verdrehbereich der ebenen Drehfeder.

Eine bevorzugte Ausführungsform sieht vor, dass die S-förmigen Federarme ausgehend von einem breiten Anschlussabschnitt angrenzend an den inneren Befestigungspunkt einen ersten sich in der Breite verjüngenden Federabschnitt aufweisen, gefolgt von einem zweiten sich in der Breite verbreitenden Federabschnitt und gefolgt von einem dritten sich in der Breite verjüngenden Federabschnitt, wobei die dritten Federabschnitte an die äußeren Befestigungspunkte angrenzen. Diese besondere Form der am inneren Befestigungspunkt angeordneten S-förmigen Federarme ermöglicht neben der linearen Federkennlinie durch die punktsymmetrisch zum inneren Befestigungspunkt verlaufenden Federarme einen kleinen Durchmesser und eine geringe Dicke der Drehfeder bei gleichzeitig maximaler Federlänge, wodurch sich die Federkonstante und das maximale Dauerwechseldrehmoment der Drehfeder optimieren lassen. Hierbei wird optimaler Weise versucht, bei einem kleinen Durchmesser der Drehfeder eine relativ hohe Weichheit zu erzeugen.

Günstiger Weise kann dabei die Verlängerung einer Mittenlinie der breiten Anschlussabschnitte der S-förmigen Federarme im Schnittpunkt zu einer Drehfeder-Mittellinie durch einen äußeren Befestigungspunkt einen Winkel im Bereich von 35° bis 55° aufweisen. Weiter kann die Verlängerung einer Mittenlinie der dritten sich verjüngenden Federabschnitte angrenzend an die äußeren Befestigungspunkte im Schnittpunkt zu der Drehfeder-Mittellinie durch einen äußeren Befestigungspunkt einen Winkel im Bereich von 80° bis 100° aufweisen. Als Mittenlinie ist hier wieder die Konturhalbierende der S-förmigen Federarme mit gleichem Abstand zur Außenkontur zu verstehen. Entsprechend dem Winkelverlauf der Mittenlinie weisen die S-förmigen Federarme eine geschlossene S-Form auf, bei der die Mittenlinie zwischen dem inneren Befestigungspunkt und den äußeren Befestigungspunkten eine absolute Winkeländerung von über 360°, bevorzugt von mindestens 370°, insbesondere von mindestens 385° aufweist. Diese Anordnung und dieser Winkelverlauf der zwei S-förmigen Federarme verbessert die Federgeometrie und führt zu einer verbesserten Federkonstante und Federeigenschaften.

In einer weiteren bevorzugten Ausgestaltung weisen Federabschnitte, welche eine ähnliche radiale Entfernung zum Federelement Mittelpunkt aufweisen wie die äußeren Befestigungspunkte, eine geringere Breite auf, vorzugsweise liegt der Bereich mit der geringsten Breite in der kleinsten radialen Entfernung zu dem äußeren Befestigungspunkt. Durch die Verbreiterung der Federabschnitte, welche in kurzer radialer Distanz zum Mittelpunkt der ebenen Drehfeder aufweisen und einer Verjüngung der der Breite der Federabschnitte, welche eine große radiale Distanz zum Mittelpunkt der ebenen Drehfeder aufweisen kann, eine optimale Federsteifigkeit erreicht werden. Federabschnitte, welche zum Mittelpunkt der ebenen Drehfeder eine größere radiale Distanz aufweisen als die äußeren Befestigungspunkte sollten ebenfalls einen sich in der Breite verbreitenden Federabschnitt aufweisen, um eine optimale Federfestigkeit zu erreichen.

Eine besondere Ausgestaltung sieht vor, dass die ebene Drehfeder mittels eines Spritzgießverfahrens hergestellt ist. Beim Spritzgießverfahren kann durch das Einspritzen eines flüssigen Materials unter hohem Druck in eine verschließbare Form ein Formprodukt mit einer hohen Präzision und Reproduzierbarkeit hergestellt werden. Durch die sehr glatte Oberfläche der Spritzgießform kann dabei eine sehr gute Oberflächenqualität der spritzgegossenen ebenen Drehfeder erreicht werden, so dass ein zusätzliches Polieren der Oberfläche entfallen kann und damit gleichzeitig Arbeitszeit und Produktionskosten eingespart werden können.

In einer weiteren bevorzugten Ausgestaltung ist die ebene Drehfeder aus einem amorphen Metall hergestellt ist. Die ebene Drehfeder kann dabei einteilig hergestellt sein. Ein solches amorphes Metall, welches auch metallisches Glas genannt wird, weist eine ungewöhnliche amorphe Atomanordnung auf und ist im Allgemeinen härter, korrosionsbeständiger und fester als gewöhnliche Metalle, während die Verformbarkeit üblicherweise deutlich geringer ist. Entsprechend weisen Drehfedern aus einem amorphen Metall eine hohe Federsteifigkeit und Biegeenergiedichte auf, die bis zu zehnfach höher ist als bei üblichen Titanfederlegierungen (Titan Grade 5), so dass bei einer optimalen Konstruktion eine bis zu zehnmal leichtere und kleinere Drehfeder hergestellt werden kann.

Entsprechend den technischen Eigenschaften des amorphen Metalls weisen solche einteiligen ebenen Drehfedern für serienelastische Aktoren eine sehr kleine Hysterese im Drehmoment bzw. Verdrehungsdiagramm auf und ermöglichen so eine präzisere Kraftmessung und Regelbarkeit des serienelastischen Aktors bzw. eines zugehörigen Antriebssystems. Weiter ermöglicht das geringere Gewicht und die kleineren Abmessungen einer ebenen Drehfeder aus amorphem Metall eine geringere Trägheit, weniger Vibrationen und kleinere Dimensionen des gesamten Systems. Metallisches Glas oder amorphes Metall wurde bisher nur in dünnen Schichten oder dünnen Bändern hergestellt, beispielsweise mittels Schmelzschleudern, da für eine Veränderung der natürlichen Kristallisation zu einer amorphen Kristallisationsstruktur ein rasches Abkühlen der Ausgangsschmelze notwendig ist, um die Beweglichkeit der Atome einzufrieren, bevor sie ihre übliche Kristallanordnung einnehmen können. Bei den meisten Metalllegierungen sind dafür sehr hohe Abkühlraten erforderlich. Da bei der Abkühlung der Metalllegierung sehr viel Wärme vom Inneren des Materials zur Außenfläche transportiert werden muss, kann in Abhängigkeit der erforderlichen Abkühlrate und der Wärmeleitfähigkeit unabhängig von der Umgebungstemperatur nur eine bestimmte Materialstärke erreicht werden. Entsprechend war der technische Einsatz von amorphen Metallen bisher auf Produkte beschränkt, die sich mittels einfacher mechanischer Bearbeitungsschritten aus den bisher mittels Schmelzschleudern herstellbaren dünnen Bändern und Drähten produzieren lassen.

Das Spritzgießverfahren für amorphes Metall ist ähnlich dem Kunststoff-Spritzgießverfahren. Da bei einem Spritzgießverfahren die Spritzgießform nach dem Ende des Einspritzvorgangs über integrierte Kühlkanäle und Kühlsysteme sowie eine hohe Wärmeleitfähigkeit des für die Form eingesetzten Materials sehr schnell abgekühlt werden kann, wird die erreichbare Dicke der Drehfeder aus amorphem Metall im Wesentlichen durch die notwendige Abkühlrate des Materials für die Ausbildung einer amorphen Atomanordnung und die Wärmeleitfähigkeit des Materials zum Abtransport der Wärme aus dem Inneren der Feder in der Spritzgießform begrenzt.

Eine praktische Variante sieht vor, dass die S-förmigen Federarme zwischen dem inneren Befestigungspunkt und dem äußeren Befestigungspunkt eine variierende Dicke aufweisen. Insbesondere beim Spritzgießverfahren können Federabschnitte nicht nur in der Breite eine variierende Materialstärke aufweisen, sondern auch in der Dicke. Somit können die Federeigenschaften der ebene Drehfeder in drei Dimensionen der Materialstärke verändert werden, wodurch sich zusätzliche Möglichkeiten im Design der ebenen Drehfelder und in dem Erreichen technischer Federeigenschaften ergeben. Eine gleichbleibende Dicke erleichtert insbesondere bei einem Spritzgießverfahren eine bessere und gleichmäßige Abkühlung der Schmelze und ermöglicht damit die Ausbildung der amorphen Atomanordnung in der ebenen Drehfeder. Dabei bezieht sich der Begriff gleichbleibende Dicke auf die ungestörte Oberfläche der S-förmigen Federarme, gemessen im Bereich der Mittenlinie der Federarme, d.h. der Konturhalbierenden der Federarme mit jeweils gleichem Abstand zu den Außenkanten, ohne eine Berücksichtigung der spritzgießbedingten abnehmenden Dicke am Rand der Federarme. Vorzugsweise könnte auch der innere Befestigungspunkt die gleiche Dicke wie die S-förmigen Federarme aufweisen.

Für einen sicheren Momenteneintrag kann der innere Befestigungspunkt eine eckige Aufnahme, bevorzugt eine Vierkantaufnahme oder quadratische Aufnahme aufweisen. Entsprechend kann auf eine oder mehrere zusätzliche Bohrungen oder Aufnahmen für eine drehsichere Befestigung der ebenen Drehfeder über den inneren Befestigungspunkt verzichtet werden. Die Vierkantaufnahme kann an den Ecken verrundet sein. Die Vierkantaufnahme ermöglicht eine sichere Einleitung der zu übertragenden Drehmomente und Kräfte und erlaubt damit eine geringe Hysterese im Drehmoment bzw. Verdrehungsdiagramm.

Zur sicheren Montage und einer störungsfreien Kraftübertragung können die äußeren Befestigungspunkte drehend lagerbar sein, vorzugsweise durch ein Nadellager gelagert sein. Durch die drehbare Lagerung der äußeren Befestigungspunkte werden die Kräfte optimal in die ebene Drehfeder eingeleitet, ohne dass größere Reibungsverluste an einem kreisförmigen Befestigungsauge entstehen. Nadellager sind aufgrund ihrer langen und flachen Bauart besonders gut für die Aufnahme von großen Lagerkräften auf kleinem Bauraum geeignet. Hierbei können die kreisförmigen Befestigungsaugen eine größere Dicke als die S-förmigen Federarme aufweisen, wobei eine Stirnseite der Befestigungsaugen eben mit einer Oberfläche der Federarme und die andere Stirnseite vorstehend zu der zweiten Oberfläche der Federarme ausgebildet ist. Die kreisförmigen Befestigungsaugen der äußeren Befestigungspunkte ermöglichen eine Kopplung mit dem angetriebenen Bauteil über nadelgelagerte Achsen. Neben der Entkopplung der Federkonstante von der Verbindung mit dem angetriebenen Bauteil werden hierdurch geringe Reibwerte, eine geringe Erwärmung und eine geringe Auswirkung auf die Hysterese im Drehmoment bzw. im Verdrehungsdiagramm erreicht, so dass insgesamt eine bessere Messgenauigkeit realisierbar ist.

Eine zweckmäßige Ausbildung sieht vor, dass die ebene Drehfeder im Wesentlichen nachbearbeitungsfrei hergestellt ist. Dabei bedeutet "im Wesentlichen nachbearbeitungsfrei" der Verzicht auf spanabhebende Konturbearbeitungen und großflächiges Polieren der Oberfläche, wodurch zusätzliche Arbeitsschritte, Zeit und Kosten eingespart werden können. Bei der Herstellung der ebenen Drehfeder in einem Spritzgießverfahren können jedoch Angussreste, Formnähte und scharfe Kanten entstehen, die ein entsprechendes Glätten, Entgraten und Abrunden notwendig machen. Derartige Arbeitsschritte sollen nicht von dem Begriff "im Wesentlichen nachbearbeitungsfrei" erfasst, sondern dem Spritzgießverfahren zugeordnet sein. Beim Herstellen der ebenen Drehfeder mittels eines Spritzgießverfahrens sind auch komplexe Geometrien kostengünstig in Serie herstellbar, da kein Erodieren oder Fräsen und nur wenige ergänzende spritzgießbedingte Arbeitsschritte notwendig sind.

Des Weiteren bezieht sich die vorliegende Erfindung auf einen serienelastischen Aktor, bevorzugt einen Robotergelenkantrieb, mit einem Elektroantrieb und einer ebenen Drehfeder gemäß den oben beschriebenen Ausführungsformen. Ein solcher erfindungsgemäßer serienelastischer Aktor kann bei kleinen Abmessungen der ebenen Drehfeder auch eine geringe Baugröße des Aktors selbst aufweisen mit einer geringen Trägheit, weniger Vibrationen, einer präziseren Kraftmessung und einer verbesserten Regelbarkeit des Systems. Gleichzeitig können durch die Einsparung von Nachbearbeitungsschritten bei der Herstellung der ebenen Drehfeder aus amorphem Metall und die kleineren Dimensionen des Aktors selbst die gesamten Herstellungskosten deutlich reduziert werden. Der Elektroantrieb kann aus einem Elektromotor vorzugsweise aus einem eisenlosen Elektromotor oder einem eisenbehafteten Innenläufermotor und einem Getriebe vorzugsweise aus einem Planetengetriebe, einem Exzentergetriebe oder einem Wellengetriebe bestehen.

Günstiger Weise kann der innere Befestigungspunkt der ebenen Drehfeder fest mit dem Elektroantrieb gekoppelt sein und die äußeren Befestigungspunkte der ebenen Drehfeder drehbar gegenüber einem angetriebenen Element gekoppelt sein. Insbesondere für den Einsatz als Robotergelenkantrieb ist es von Vorteil, die Federenden über die äußeren Befestigungspunkte drehbar gegenüber dem angetriebenen Element auszuführen, um eine möglichst geringe Hysterese im Drehmoment bzw. Verdrehungsdiagramm und damit eine hohe Messgenauigkeit und exakte Steuerung zu ermöglichen.

Weiterhin bezieht sich die vorliegende Erfindung auf ein Herstellungsverfahren für eine ebene Drehfeder, insbesondere für einen serienelastischen Aktor, nach einer der zuvor beschriebenen Ausführungsformen, das Verfahren umfasst das Bereitstellen einer Spritzgießform für die ebene Drehfeder, das Einspritzen eines spritzgussfähigen Materials, vorzugsweise einer amorphen Metalllegierung oder eines Kunststoffs in die Spritzgießform, das Abkühlen der Spritzgießform und der spritzgegossenen ebenen Drehfeder, das Entnehmen der ebenen Drehfeder aus amorphem Metall aus der Spritzgießform, und optional das Bearbeiten der ebenen Drehfeder zum Entfernen von Angussresten und Spritzgießnähten sowie zum Entgraten und Abrunden von Kanten. Weiter können optional die Flächen der ebenen Drehfeder, die einem Entformungswinkel unterliegen, durch Bearbeiten der ebenen Drehfeder soweit begradigt werden, dass die Flächen als Sitze für eine Vierkantaufnahme oder ein Lager dienen können. Der Entformungswinkel dient der einfacheren Entformung der ebene Drehfeder aus dem Spritzgusswerkzeug. Durch den Entformungswinkel wird ein Verkanten der ebene Drehfeder beim Entformen aus dem Spritzgusswerkzeug verhindert. Bei den Bereichen welche als Sitze für das Lager oder den Vierkant dienen, kann zusätzlich nach dem Entformen durch eine Feinbearbeitung bzw. Feinfräsen oder Ausreiben eine ausreichende Begradigung der Fläche erzeugt werden, sodass die Fläche als Sitz für die Vierkantaufnahme oder für ein Lager, beispielsweise in einem kreisförmigen Befestigungsauge im äußeren Befestigungsabschnitt, dienen kann.

Ein derartiges Herstellungsverfahren ermöglicht die Bereitstellung einer ebenen Drehfeder mit kleinen Abmessungen und geringem Gewicht, einer großen Federkonstante und hohen Steifigkeit. Der Einsatz einer derart hergestellten ebenen Drehfeder in einem serienelastischen Aktor ermöglicht geringere Vibrationen, eine präzisere Kraftmessung und eine verbesserte Regelbarkeit des Aktors bei gleichzeitig kleinen Dimensionen und einem geringeren Gewicht. Hierbei besteht die amorphe Metalllegierung bevorzugt aus mindestens vier Elementen mit grundsätzlich verschiedenen Atomgrößen. Die resultierende Kristallstruktur ist ein günstig formuliertes Eutektikum, das Abkühlzeiten von mehreren Sekunden zulässt, ohne einen Rekristallisationsprozess auszulösen, was es ermöglicht, eine ebene Drehfeder aus einem amorphen Metall in einem Spritzgießverfahren herzustellen.

Im Folgenden wird eine nicht einschränkende Ausführungsform der vorliegenden Erfindung anhand beispielhafter Zeichnungen näher erläutert. Es zeigen:
- Fig. 1: ein Blockschaltbild eines erfindungsgemäßen serienelastischen Aktors,
- Fig. 2: eine Draufsicht auf eine erfindungsgemäße ebene Drehfeder für den serienelastischen Aktor aus Fig. 1,
- Fig. 3: eine perspektivische Ansicht der ebenen Drehfeder aus Fig. 2,
- Fig. 4: eine perspektivische Seitenansicht der ebenen Drehfeder aus Fig. 2,
- Fig. 5: die Draufsicht der ebenen Drehfeder aus Fig. 2 mit Drehfeder-Mittellinie und Federarm-Mittellinie,
- Fig. 6: eine perspektivische Ansicht einer ebenen Drehfeder mit variierender Dicke der Federarme,
- Fig. 7a,b: eine Draufsicht auf weitere Ausführungsbeispiel einer ebene Drehfeder,
- Fig. 8a,b: eine Schnittansicht des S-förmigen Federarms,
- Fig. 9: eine perspektivische Ansicht auf einen Teil des S-förmigen Federarms mit variierendem Querschnitt,
- Fig. 10: eine perspektivische Ansicht auf einen Teil des S-förmigen Federarms mit weiterem Querschnitt, und
- Fig. 11: eine weitere Schnittansicht des S-förmigen Federarms.

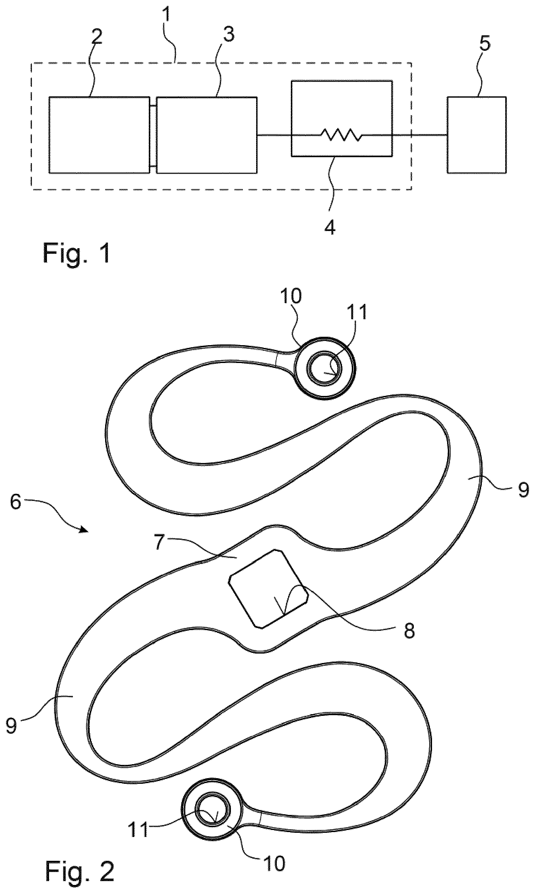

Das Blockschaltbild in Fig. 1 veranschaulicht die wesentlichen Komponenten eines serienelastischen Aktors 1 mit einer drehmomenterzeugenden Einheit, üblicherweise einem Elektromotor 2, der über ein Getriebe 3 und ein Federelement 4 mit einem anzutreibenden Element 5, beispielsweise einem Roboterarm, einem Exoskelett oder einem Laufroboter, verbunden ist. Das Getriebe 3 ermöglicht die Verwendung eines kleineren Elektromotors 2, der mit höheren Drehzahlen betrieben wird. Dabei kann das Getriebe 3 integraler Bestandteil des Elektromotors 2 sein oder von diesem getrennt ausgebildet sein. Ein Elektroantrieb kann einen Elektromotor 2 und zusätzlich ein Getriebe 3 umfassen. Das Getriebe 3 untersetzt häufig die Drehzahl des Elektromotors 3 wobei das Drehmoment des Elektroantriebes im gleichen Verhältnis erhöht wird. Als Elektromotor 2 kommen aufgrund ihrer hohen Dynamik häufig eisen- oder nutenlose Elektromotoren zum Einsatz. Als Getriebe 3 kann beispielsweise ein Planetengetriebe, ein Exzentergetriebe oder ein Wellengetriebe verwendet werden. In diesem serienelastischen Aktor 1 ist ein Federelement 4 in Reihe mit dem Ausgang des Getriebes 3 gekoppelt oder, wenn kein separates Getriebe 3 verwendet wird, direkt mit dem Elektromotor 2 verbunden. Das von dem serienelastischen Aktor 1 anzutreibende Element 5 ist in Reihe mit der zweiten Seite des Federelements 4 verbunden. Das Federelement 4 führt an der Schnittstelle zwischen dem serienelastischen Aktor 1 und dem anzutreibenden Element 5 eine Serienelastizität ein, die eine präzise Steuerung der auf das anzutreibende Element 5 ausgeübten Kraft ermöglicht. Derartige serienelastische Aktoren 1 werden in großer Anzahl in Industrierobotern als Robotergelenkantriebe eingesetzt, bei denen große Kräfte und Drehmomente präzise auf das anzutreibende Element 5, d.h. den Roboterarm, dauerhaft übertragen werden müssen.

Bei einem Einsatz in Industrierobotern kann der axiale Abstand zwischen dem serienelastischen Aktor 1 und dem anzutreibenden Element 5 und zusätzlich auch die maximale Länge des serienelastischen Aktors 1 eng begrenzt sein, was sich insbesondere auf die maximale Länge des eingesetzten Federelements 4 auswirkt. Ebenso kann der radiale Durchmesser des serienelastischen Aktors 1 stark eingeschränkt sein, was gleichzeitig den maximalen Durchmesser des Federelements 4 begrenzt. Entsprechend ist es wichtig die für das Federelement 4 benötigte Steifigkeit in einem kleinen Bauraum unterzubringen und gleichzeitig eine ausreichend sichere Kopplung des Federelements 4 mit dem Getriebe 3 und dem anzutreibenden Element 5 sicherzustellen, um ein Durchrutschen und damit eine Hysterese im Drehmoment bzw. Verdrehungswinkelverlauf zu vermeiden.

In dem serienelastischen Aktor 1 aus Fig. 2 wird als Federelement 4 eine ebene Drehfeder 6 eingesetzt, deren Federarme 9 einen S-förmigen Verlauf aufweisen. Wie in Fig. 2 zu erkennen, umfasst die ebene Drehfeder 6 einen inneren Befestigungspunkt 7 mit einer an den Ecken verrundeten Vierkantaufnahme 8 für ein Vierkantprofil zur Kopplung mit dem Getriebe 3, zwei S-förmige Federarme 9, die jeweils eine identische Kontur aufweisen und sich um 180° versetzt punktsymmetrisch zum inneren Befestigungspunkt 7 erstrecken, sowie zwei äußere Befestigungspunkte 10, die mit den äußeren Enden der S-förmigen Federarme 9 verbunden sind. Die Vierkantaufnahme 8 des inneren Befestigungsabschnitts 7 ermöglicht eine schlupffreie Kopplung der ebenen Drehfeder 6 mit dem zugehörigen Drehmoment-Antrieb durch einen Elektromotor 2 oder Getriebe 3. Die äußeren Befestigungspunkte 10 sind als kreisförmige Befestigungsaugen 11 ausgebildet. Solche Befestigungsaugen 11 ermöglichen die drehbare Lagerung beispielsweise durch die Anordnung von nadelgelagerten Befestigungsachsen (nicht gezeigt) zur reibungsarmen Kopplung mit dem anzutreibenden Element 5, um eine Erwärmung durch Reibung zu minimieren und Auswirkungen auf die Hysterese zu verhindern, wodurch sich die Genauigkeit der Drehmomentmessung verbessern lässt.

Als Federelement 4 in einem Aktor 1 können vorzugsweise auch zwei ebene Drehfedern 6 welche vorzugsweise entgegengesetzt verlaufen angeordnet werden. Dadurch eine Asymmetrie in der Auslenkung des Federelementes 4 in Abhängigkeit von der Drehrichtung des Aktors 1 verhindert werden. Zusätzlich kann eine Vorspannung der ebenen Drehfedern 6 zwischen der Vierkantaufnahme 8 und den äußeren Befestigungspunkten der nebeneinander angeordneten ebenen Drehfeder 6 erzeugt werden.

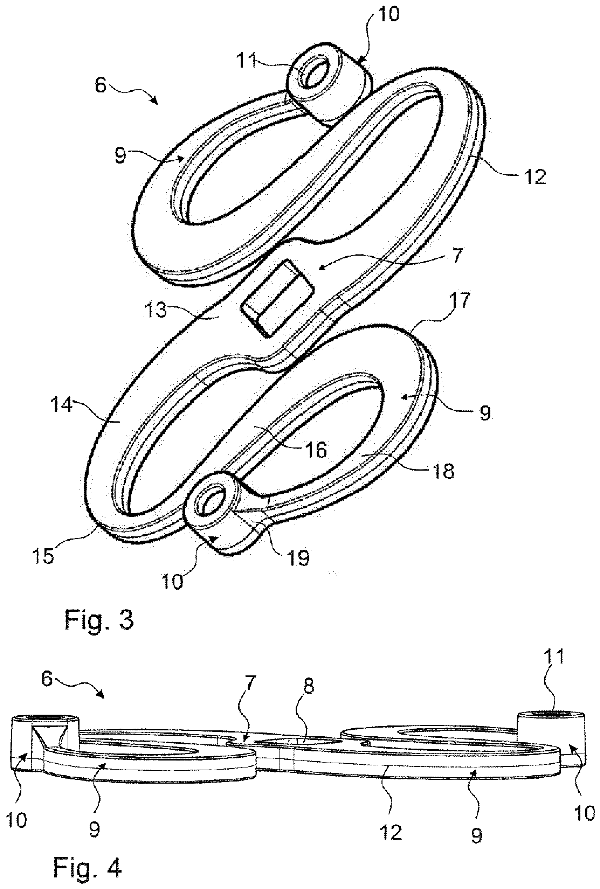

Die perspektivische Darstellung der ebenen Drehfeder 6 in Fig. 3 und Fig. 4 zeigt eine gleichbleibende Dicke der beiden S-förmigen Federarme 9 und des inneren Befestigungsabschnitts 7 dieser beispielsweise aus amorphem Metall mittels eines Spritzgießverfahrens hergestellten ebenen Drehfeder 6. An den Außenkanten der S-förmigen Federarme 9, des inneren Befestigungspunkts 7 und den äußeren Befestigungspunkten 10 ist eine umlaufende Formnaht 12 zu erkennen, die durch die beim Spritzgießverfahren verwendete zweiteilige Form entsteht. Die äußeren Befestigungspunkte 10 weisen im Gegensatz zu dem inneren Befestigungspunkten 7 und den S-förmigen Federarmen 9 eine deutlich größere Dicke auf, wobei die Befestigungsaugen 11 lediglich auf der Oberseite der ebenen Drehfeder 6 vorstehen. Wie in der perspektivischen Seitenansicht in Fig. 4 zu erkennen, sind die Befestigungsaugen 11 auf der Unterseite der ebenen Drehfeder 6 in einer Ebene mit den S-förmigen Federarmen 9 und dem inneren Befestigungsabschnitt 7. Dadurch können die beiden Unterseiten oder Rückseiten von zwei ebene Drehfedern 6 ebenen aneinander anliegen.

Der inneren Befestigungspunkte 10 und die äußeren Befestigungspunkte 7 sind gegenüber den weiteren Teilen der S-förmigen Federarme, welche als Abschnitte bezeichnet werden, eher zentriert, bzw. punktförmig ausgestaltet. Der inneren Befestigungspunkte 10 und die äußeren Befestigungspunkte 7 können jedoch auch als konstruktive Abschnitte verstanden und somit als inneren Befestigungsabschnitt und äußerer Befestigungsabschnitt bezeichnet werden.

Die ebene Drehfeder 6 kann, wie in Fig. 2 und Fig. 3 gut zu erkennen, zwei mit einer besonderen Kontur ausgebildete S-förmige Federarme 9 aufweisen. Die beiden S-förmigen Federarme 9 einer erfindungsgemäßen ebenen Drehfeder 6 erstrecken sich ausgehend von dem inneren Befestigungspunkt 7 in um 180° versetzte, einander entgegengesetzte Richtungen. Hierbei erstrecken sich die S-förmigen Federarme 9 ausgehend von einem breiten Anschlussabschnitt 13 am inneren Befestigungspunkt 7 in einem sich in der Breite verjüngenden ersten Federabschnitt 14, der sich bis in den Bereich des ersten inneren Bogens 15 der S-förmigen Federarme 9 hinzieht. An diesen ersten sich in der Breite verjüngenden Federabschnitt 14 schließt sich im Bereich des inneren Bogens 15 ein sich in der Breite verbreitender zweiter Federabschnitt 16 an, der sich bis in einen zweiten äußeren Bogen 17 der S-förmigen Federarme 9 hinzieht und dort in einen sich in der Breite verjüngenden dritten Federabschnitt 18 übergeht. Der dritte sich in der Breite verjüngende Federabschnitt 18 erstreckt sich bis zu einem Verbindungsabschnitt 19 zu den Befestigungsaugen 11.

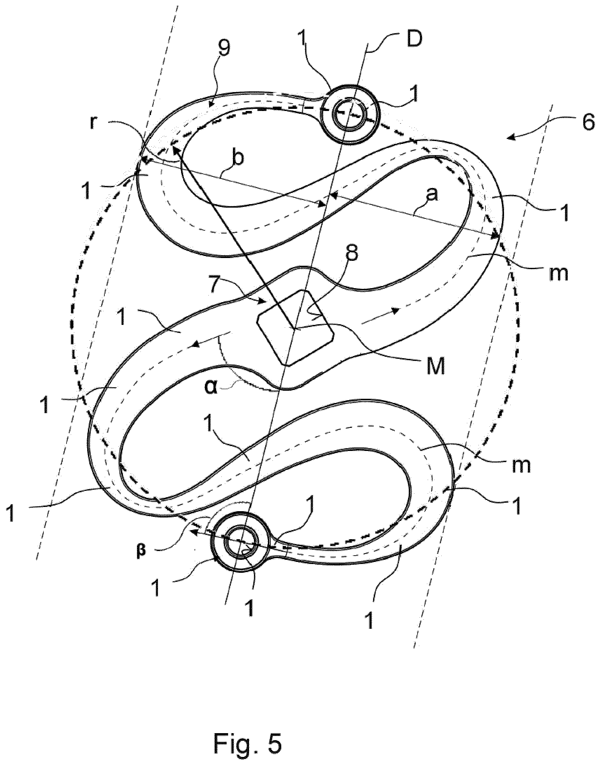

In der in Fig. 5 gezeigten Draufsicht auf die bereits in Fig. 2 dargestellte ebene Drehfeder 6 ist neben der gebogenen Kontur der S-förmigen Federarme 9 auch deren Mittenlinie m eingezeichnet, eine Konturhalbierende auf der Oberfläche der S-förmigen Federarme 9, die im gleichen Abstand zur äußeren Kontur der S-förmigen Federarme 9 zwischen dem inneren Befestigungspunkt 7 und den äußeren Befestigungspunkten 10 verläuft. Auch hier ist wieder deutlich die besondere Kontur der S-förmigen Federarme 9 zu erkennen, die ausgehend von dem inneren Befestigungspunkt 7 und dem angrenzenden breiten Anschlussabschnitt 13, dem ersten sich verjüngenden Federabschnitt 14, dem inneren Bogen 15, dem zweiten sich verbreitenden Federabschnitt 16, dem äußeren Bogen 17 und dem dritten sich verjüngenden Federabschnitt 18 sowie über den Verbindungsabschnitt 19 zu den äußeren Befestigungspunkten 10 verläuft. Dabei weist die Verlängerung einer Mittenlinie m des breiten Anschlussabschnitts 13 im Schnittpunkt zu einer Drehfeder-Mittellinie DM, die sich durch den Mittelpunkt M des inneren Befestigungspunktes 7 und dem äußeren Befestigungspunkt 10 des Befestigungsauges 11 erstreckt, einen Winkel α im Bereich von 35° bis 55° zur Drehfeder-Mittellinie DM auf. Weiter weist das Ende der S-förmigen Federarme 9 im dritten Federabschnitt 18 einen Winkel β zwischen der Verlängerung einer Mittenlinie m und der Drehfeder-Mittellinie DM im Bereich von 80° bis 100° auf. Entsprechend bildet der Konturverlauf der S-förmigen Federarme 9 eine vollständige S-Form ab, bei der die Mittenlinie m im Verlauf über die S-förmigen Federarme 9 eine absolute Winkeländerung von über 360° aufweist. In der in Fig. 5 gezeigten beispielhaften Form der erfindungsgemäßen ebenen Drehfeder 6 weisen die S-förmigen Federarmen 9 eine absolute Winkeländerung von über 400° auf.

Die Drehfeder-Mittelinie DM ist eine Gerade, die durch den Mittelpunkt M und mindestens einen äußeren Befestigungspunkt 10 verläuft. Abhängig von der Anordnung der S-förmigen Federarme kann die Drehfeder-Mittelinie DM auch durch den Mittelpunkt M und zwei äußere Befestigungspunkte 10 verlaufen.

Die S-förmigen Federarme 9 einer erfindungsgemäßen ebenen Drehfeder 6 weisen neben der vollständigen S-Form auch einen ungewöhnlichen Verlauf der Breite der S-förmigen Federarme 9 zwischen dem breiten Anschlussabschnitt 13 und dem sich verjüngenden dritten Federabschnitt 18 auf. Dieser als dick-dünn-dick-dünn zu charakterisierende Verlauf der S-förmigen Federarme 9 erlaubt in Verbindung mit den Abständen des inneren Bogens 15 und des äußeren Bogen 17 zur Drehfeder-Mittellinie DM die hohe Linearität der erfindungsgemäßen ebenen Drehfeder 6. Hierbei ist die Länge des Abstands a der Außenkontur des inneren Bogens 15 zur Drehfeder-Mittellinie DM möglichst gleich groß wie die Länge des Abstands b der Außenkontur des äußeren Bogens 17 zur Drehfeder-Mittellinie DM. Wie in der Fig. 5 zu erkennen, ist in der hier gezeigten Ausführungsform der ebenen Drehfeder 6 der Abstand b der äußeren Kontur der äußeren Bögen 17 zur Drehfeder-Mittellinie DM weniger als 20 %, bevorzugt weniger als 10 % größer als der Abstand a der äußeren Kontur der inneren Bögen 15 gegenüber der Drehfeder-Mittellinie DM.

Vom Mittelpunkt M der ebene Drehfeder 6 zum kreisförmigen Befestigungsauge 11 besteht der S-förmige Federarm 9 aus mehreren Abschnitten. Auf den breiten Anschlussabschnitt 13, folgt der erste Federabschnitt 14, der innere Bogen 15, der zweite Federabschnitt 16, der äußere Bogen 17 und schließlich der dritte Federabschnitt 18. Auf die ebene Drehfeder 6 kann ein Kreis mit dem Mittelpunkt beim Mittelpunkt M der ebenen Drehfeder 6 und einem Radius, welcher dem Abstand r zwischen dem Mittelpunkt M und dem äußeren Befestigungspunkt 10 entspricht, gezogen werden. Abschnitte der S-förmigen Federarme 9, welche nahe an dem Kreis liegen haben eine geringere Breite als Abschnitte, welche eine größere Entfernung zum Kreis aufweisen. Dies gilt für Bereiche der S-förmigen Federarmabschnitte, welche innerhalb des Kreises liegen und für Bereiche der S-förmigen Federarmabschnitte, welche außerhalb des Kreises liegen.

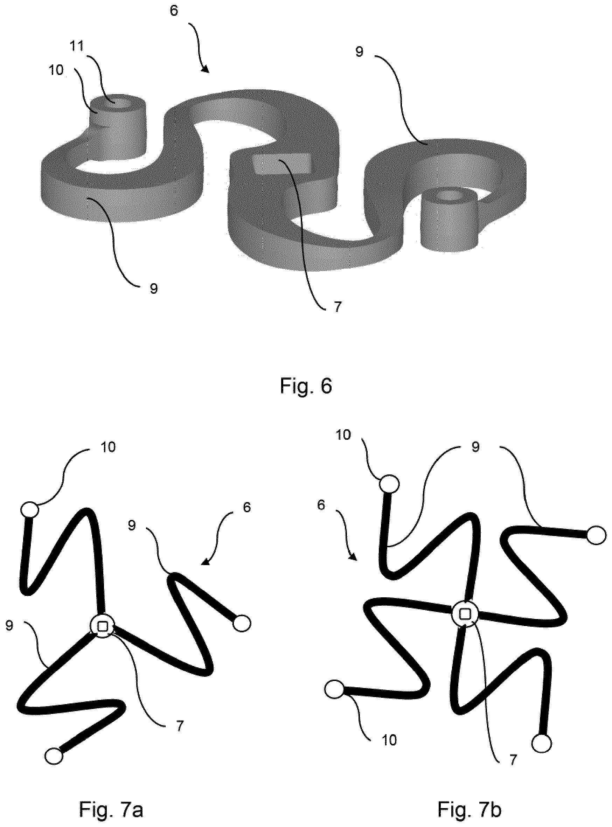

Figur 6 zeigt eine ebene Drehfeder 6 mit S-förmigen Federarmen 9, wobei die S-förmigen Federarme 6 zwischen dem inneren Befestigungspunkt 7 und dem äußeren Befestigungspunkt 10 eine variierende Dicke aufweisen. Durch die variierende Dicke der verschiedenen Abschnitte des S-förmigen Federarme 6, können die federelastischen Eigenschaften der S-förmigen Federarme 6 nicht nur durch Verändern der Breite, sondern zusätzlich durch Verändern der Dicke angepasst werden. Dies ermöglicht zusätzliche Optionen im Design der ebene Drehfeder 6. Insbesondere bei Teilen, welche im Spritzgussverfahren hergestellt werden, ist es möglich die Form des Spritzgusswerkzeugs und damit die Form des darin erzeugten Bauteils dreidimensional festzulegen. Falls wie beschrieben zwei ebene Drehfeder 6 in einem Aktor 1 angeordnet werden, sollte die variierende Dicke, auf der der zweiten ebenen Drehfeder 6 abgewandten Seite bestehen. Es ist auch beispielsweise möglich eine Distanznocke, zur gegenseitigen Beanstandung der beiden ebene Drehfeder 6, vorzusehen.

Die Figuren 7a und b zeigen weiter Ausführungsbeispiele für eben Drehfedern 6. Die eben Drehfedern 6 in Figur 7a weist drei S-förmige Federarme 9 auf, während die eben Drehfedern 6 in Figur 7b vier S-förmige Federarme 9 aufweist. Es sind auch ebene Drehfedern 6 mit fünf oder mehr S-förmige Federarmen 9 möglich. Dabei ist jedoch zu beachten, dass mit der Zahl der S-förmige Federarme 9 die Kollisionsgefahr zwischen den S-förmige Federarme 9 beim Verdrehen der ebenen Drehfedern 6 steigt.

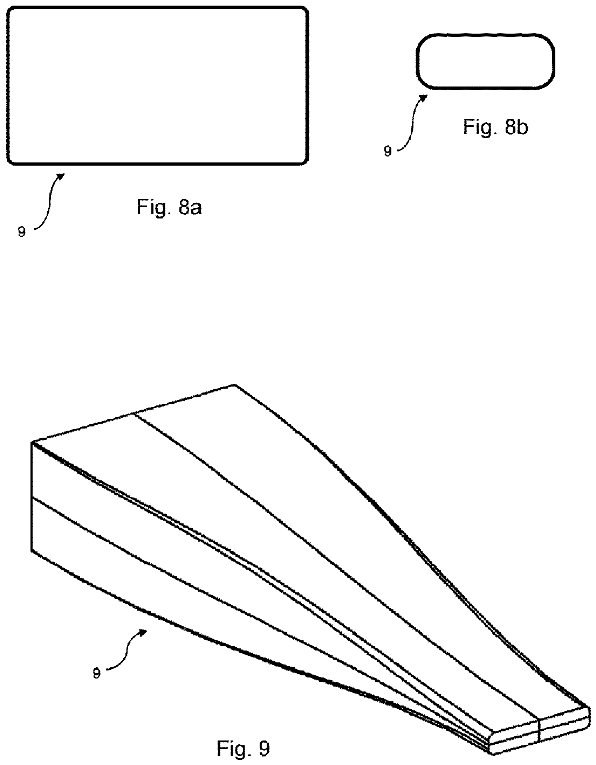

Die Figuren 8a und b zeigen verschiedene Schnittansichten des S-förmigen Federarms 9 einer ebenen Drehfeder 6. Wie bei der Figur 6 gezeigt, kann die Breite und die Dicke und damit der Querschnitt der S-förmigen Federarme 9 variieren. In der Figur 8a sind die Ecken des annähernd viereckigen Querschnittes des S-förmigen Federarmes 9 nur leicht gerundet. In der Figur 8b sind die Ecken des annähernd viereckigen Querschnittes des S-förmigen Federarmes 9 deutlich stärker gerundet. Durch ein Verrunden der Ecken können beispielsweise Ermüdungsbrüche des S-förmigen Federarmes 9 reduziert werden.

Figur 9 zeigt eine perspektivische Ansicht auf einen Teil des S-förmigen Federarms 9 mit variierendem Querschnitt. Der Querschnitt verjüngt sich zum rechten unteren Ende und damit zu perspektivisch nahen Ende der Figur 9 und vergrößert sich zum rechten oberen bzw. perspektivisch entfernteren Ende des Abschnitts des S-förmigen Federarms 9. Um die Ausdehnung des Querschnitts zu verdeutlichen sind zusätzliche Hilfslinien mittig an den Außenflächen des S-förmigen Federarms 9 aufgezeichnet. Die Ecken des annähernd viereckigen Querschnittes des S-förmigen Federarms 9 sind dabei abhängig vom Querschnitt unterschiedlich stark gerundet. Die Verrundung der Ecken kann von den Anforderungen an die Biegebelastung abhängig sein.

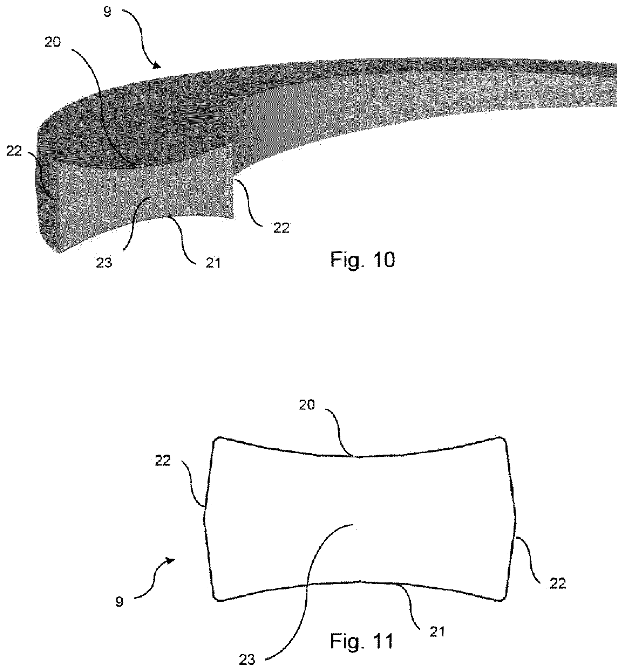

Figur 10 zeigt eine perspektivische Ansicht auf einen Teil des Abschnitts des S-förmigen Federarms 9 mit einem weiteren Querschnitt. Der Querschnitt des S-förmigen Federarmes 9 ist optimiert auf die federelastische Belastung sowie das Gewicht des S-förmigen Federarms 9. Die Oberseite 22 des S-förmiger Federarms 9 und die Unterseite 21 des S-förmigen Federarms 9 sind dabei zum Mittelpunkt 23 der Querschnittfläche des S-förmiger Federarms 9 durchgebogen. An den Seitenflächen 22 des S-förmigen Federarms 9 ist die Höhe des Querschnitts am größten, während die Höhe des Querschnitts zur Mitte hin am geringsten ist. Der Querschnitt kann entfernt an einen Doppel-T-Träger erinnern. Der Querschnitt verhindert ein vorzeitiges Ermüden und damit Ermüdungsbrüche des S-förmigen Federarms 9. Zusätzlich wird durch die Reduzierung der Höhe des Querschnitts zur Mitte hin Material eingespart und dadurch das Gewicht der ebenen Drehfeder 9 reduziert.

Figur 11 zeigt die Schnittansicht aus Figur 10 mit ausgeprägten Ausbuchtungen in den Seitenflächen 22 des S-förmigen Federarms 9. Die Ausbuchtungen entstehen durch einen Entformungswinkel, den Flächen in Entformungsrichtung an den Spritzgussbauteilen aufweisen sollten. Durch den Entformungswinkel, welcher zwischen 0,1° und 10° betragen kann, kann das Spritzgussbauteil einfacher und ohne zu Verkanten aus dem Spritzgusswerkzeug entfernt werden. Flächen, welche einen Entformungswinkel aufweisen, können durch Nachbearbeitung begradigt werden.

Im Gegensatz zu herkömmlichen Produkten aus amorphem Metall, die zunächst als dünne Schichten oder Bänder hergestellt und dann weiterbearbeitet werden, wird die erfindungsgemäße ebene Drehfeder 6 in einem besonderen Spritzgießverfahren hergestellt, das eine hohe Präzision und Reproduzierbarkeit ermöglicht. Durch ein solches Spritzgießverfahren lässt sich sowohl die komplexe Geometrie der erfindungsgemäßen ebenen Drehfeder 6 realisieren, als auch kostengünstig in der Serienherstellung produzieren, ohne dass eine spanabhebende Konturbearbeitung oder Polieren der Oberfläche notwendig ist. Bei einem solchen Spritzgießverfahren sind je nach Ausgestaltung der Spritzgießform lediglich ein Entgraten und Abrunden von Angussresten, Formnähten und Kanten notwendig. Notwendig für die Durchführung eines solchen Spritzgießverfahrens ist die Bereitstellung einer geeigneten Spritzgießform für die ebene Drehfeder 6, die nicht nur einen Hohlraum zur Ausformung der ebenen Drehfeder 6 aufweist, sondern auch aus einem gut wärmeleitenden Material hergestellt ist und entsprechende Kühlkanäle und Kühleinrichtungen aufweist, um die für die amorphe Erstarrung der Metalllegierung notwendige hohe Abkühlrate zu erreichen. Nach dem Einspritzen der amorphen Metalllegierung in die entsprechend der Temperatur der Metalllegierung erwärmte Spritzgießform wird im nächsten Arbeitsschritt die Spritzgießform mit der darin eingespritzten ebenen Drehfeder 6 rasch abgekühlt, bevor die erstarrte ebene Drehfeder 6 aus amorphem Metall aus der Spritzgießform entnommen werden kann. Üblicherweise besteht die Spritzgießform aus mindestens zwei Hälften, die für den Spritzgießvorgang aufeinander gepresst werden, aber ein einfaches Entnehmen der erstarrten ebenen Drehfeder 6 ermöglichen. Die Schnittstelle zwischen den beiden Hälften der Spritzgießform lässt sich üblicherweise an den Formnähten 12 auf der spritzgegossenen ebenen Drehfeder 6 erkennen.

Anstelle von amorphem Metall kann die ebene Drehfeder 6 auch aus einem anderen spritzgussfähigen Material wie beispielsweise Kunststoff oder Keramik hergestellt werden. Kunststoff hat den Vorteil, dass dieser ein geringeres Gewicht hat und kostengünstig beschafft und verarbeitet werden kann. Vorteilhafterweise weist das Spritzgussmaterial gute federelastische Eigenschaften auf, sei es durch ein Grundmaterial mit hoher Elastizität oder durch Beifügung geeigneter Komponenten wie Glas- oder Kohlefasern.

### Bezugszeichenliste

- 1: Aktor
- 2.: Elektromotor
- 3.: Getriebe
- 4: Federelement
- 5: anzutreibendes Element
- 6: ebene Drehfeder
- 7: innerer Befestigungspunkt
- 8: Vierkantaufnahme
- 9: S-förmiger Federarm
- 10: äußerer Befestigungspunkt
- 11: kreisförmiges Befestigungsauge
- 12: Formnaht
- 13: breiter Anschlussabschnitt
- 14: erster Federabschnitt
- 15: innerer Bogen
- 16: zweiter Federabschnitt
- 17: äußerer Bogen
- 18: dritter Federabschnitt
- 19: Verbindungsabschnitt
- 20: Oberseite des S-förmiger Federarms
- 21: Unterseite des S-förmiger Federarms
- 22: Seitenflächen des S-förmiger Federarms
- 23: Mittelpunkt der Querschnittfläche

- a: Abstand
- b: Abstand
- m: Mittenlinie
- DM: Drehfeder-Mittellinie
- M: Mittelpunkt
- α: Winkel
- β: Winkel
- r: Radius

## Patentansprüche

1. Ebene Drehfeder (6), insbesondere für einen serienelastischen Aktor (1), mit einem inneren Befestigungspunkt (7), mindestens zwei äußeren Befestigungspunkten (10) und mindestens zwei Federarmen (9), die jeweils den inneren Befestigungspunkt (7) mit je einem der äußeren Befestigungspunkte (10) federelastisch verbinden, wobei die Federarme (9) eine gleichartige Kontur aufweisen und symmetrisch, vorzugsweise punktsymmetrisch zum inneren Befestigungspunkt (7) verlaufen,
**dadurch gekennzeichnet, dass** die Federarme (9) einen S-förmigen Verlauf aufweisen.

2. Ebene Drehfeder (6) nach Anspruch 1,
**dadurch gekennzeichnet, dass** die Drehfeder (6) zwei Federarme (9) aufweist.

3. Ebene Drehfeder (6) nach Anspruch 1 oder 2,
**dadurch gekennzeichnet, dass** eine Drehfeder-Mittellinie (DM) vorgesehen ist, die sich als Gerade durch einen äußeren Befestigungspunkt (10) und einen Mittelpunkt (M) der Drehfeder (6) erstreckt, wobei die S-förmigen Federarme (9) jeweils einen an den inneren Befestigungspunkt (7) angrenzenden inneren Bogen (15) und einen an die äußeren Befestigungspunkt (10) angrenzenden äußeren Bogen (17) aufweisen, und wobei sich die Länge des Abstands (a) der Außenkontur des inneren Bogens (15) gegenüber der Drehfeder-Mittellinie (DM) und die Länge des Abstands (b) der Außenkontur des äußeren Bogens (17) gegenüber der Drehfeder-Mittellinie (DM) weniger als 20%, vorzugsweise weniger als 10% unterscheiden, und besonders bevorzugt die beiden Längen der Abstände (a) und (b) gleich groß sind.

4. Ebene Drehfeder (6) nach einem der Ansprüche 1 bis 3,
**dadurch gekennzeichnet, dass** die S-förmigen Federarme (9) ausgehend von einem breiten Anschlussabschnitt (13) angrenzend an den inneren Befestigungspunkt (7) einen ersten sich in der Breite verjüngenden Federabschnitt (14) aufweisen, gefolgt von einem zweiten sich in der Breite verbreitenden Federabschnitt (16) und gefolgt von einem dritten sich in der Breite verjüngenden Federabschnitt (18), wobei die dritten Federabschnitte (18) an die äußeren Befestigungspunkte (10) angrenzen.

5. Ebene Drehfeder (6) nach Anspruch 4,
**dadurch gekennzeichnet, dass** die Verlängerung einer Mittenlinie (m) der breiten Anschlussabschnitte (13) der S-förmigen Federarme (9) im Schnittpunkt zu einer Drehfeder-Mittellinie (DM) durch einen äußeren Befestigungspunkt (10) einen Winkel (a) im Bereich von 35° bis 55° aufweist.

6. Ebene Drehfeder (6) nach einem der Ansprüche 4 oder 5,
**dadurch gekennzeichnet, dass** die Verlängerung einer Mittenlinie (m) der dritten sich verjüngenden Federabschnitte (18) angrenzend an die äußeren Befestigungspunkte (10) im Schnittpunkt zu der Drehfeder-Mittellinie (DM) durch einen äußeren Befestigungspunkt (10) einen Winkel (β) im Bereich von 80° bis 100° aufweist.

7. Ebene Drehfeder (6) nach einem der Ansprüche 1 bis 6,
**dadurch gekennzeichnet, dass** die Federabschnitte (14, 16, 18) welche eine ähnliche radiale Entfernung zum Mittelpunkt (M) der Drehfeder (6) aufweisen wie die äußeren Befestigungspunkte (10) eine geringere Breite aufweisen, vorzugsweise liegt der Bereich mit der geringsten Breite in der kleinsten radialen Entfernung zu dem äußeren Befestigungspunkt (10).

8. Ebene Drehfeder (6) nach einem der Ansprüche 1 bis 7,
**dadurch gekennzeichnet, dass** die ebene Drehfeder (6) mittels eines Spritzgießverfahrens hergestellt ist.

9. Ebene Drehfeder (6) nach Anspruch 8,
**dadurch gekennzeichnet, dass** die ebene Drehfeder (6) aus amorphem Metall hergestellt ist.

10. Ebene Drehfeder (6) nach einem der Ansprüche 1 bis 9,
**dadurch gekennzeichnet, dass** die S-förmigen Federarme (9) zwischen dem inneren Befestigungspunkt (7) und den äußeren Befestigungspunkt (10) eine variierende Dicke aufweisen.

11. Ebene Drehfeder (6) nach einem der Ansprüche 1 bis 10,
**dadurch gekennzeichnet, dass** der innere Befestigungspunkt (7) eine eckige Aufnahme, bevorzugt eine an den Ecken verrundete Vierkantaufnahme (8) aufweist.

12. Ebene Drehfeder (6) nach einem der Ansprüche 1 bis 11,
**dadurch gekennzeichnet, dass** der äußere Befestigungspunkt (10) drehend lagerbar ist, vorzugsweise durch ein Nadellager lagerbar ist.

13. Serienelastischer Aktor (1), bevorzugt ein Robotergelenkantrieb, mit einem Elektroantrieb und einer ebenen Drehfeder (6) nach einem der Ansprüche 1 bis 12.

14. Serienelastischer Aktor (1) nach Anspruch 13,
**dadurch gekennzeichnet, dass** der innere Befestigungspunkt (7) der ebenen Drehfeder (6) fest mit dem Elektroantrieb gekoppelt ist und die äußeren Befestigungspunkte (10) der ebenen Drehfeder (6) drehbar gegenüber einem anzutreibenden Element (5) gekoppelt sind.

15. Herstellungsverfahren für eine ebene Drehfeder (6), insbesondere für einen serienelastischen Aktor (1), nach einem der Ansprüche 1 bis 12, mit den Schritten:
Bereitstellen einer Spritzgießform für die ebene Drehfeder (6),
Einspritzen eines spritzgussfähigen Materials, vorzugsweise einer amorphen Metalllegierung oder eines Kunststoffs in die Spritzgießform,
Abkühlen der Spritzgießform und der spritzgegossenen ebenen Drehfeder (6),
Entnehmen der ebenen Drehfeder (6) aus spritzgussfähigem Material, aus der Spritzgießform, und optional:
- Bearbeiten der ebenen Drehfeder (6) zum Entfernen von Angussresten und Spritzgießnähten sowie zum Entgraten und Abrunden von Kanten; sowie
- Bearbeiten der ebenen Drehfeder (6) zum Begradigen von Flächen, sodass Flächen, die einem Entformungswinkel unterliegen, soweit begradigt werden, dass die Flächen als Sitze für eine Vierkantaufnahme (8) oder ein Lager dienen können.
